# EUROPEAN PATENT SPECIFICATION

(11) **EP 4 306 293 B1**
(45) Date of publication and mention of the grant of the patent: **15.01.2025**
(21) Application number: 23185686.5
(22) Date of filing: 14.07.2023
(51) Int. Cl.: B29C 51/10, B29C 51/36, B29C 51/44

(54) **PROTRUSION TRAY MANUFACTURED BY VACUUM FORMING**
DURCH VAKUUMFORMEN HERGESTELLTE PROTRUSIONSSCHALE
PLATEAU EN SAILLIE FABRIQUÉ PAR FORMAGE SOUS VIDE

(30) Priority: 14.07.2022 KR 20220086699
(43) Date of publication of application: 17.01.2024
(73) Proprietor: Samsung SDI Co., Ltd., Yongin-si, Gyeonggi-do 17084 (KR); Soochang TPS Co., Ltd., Ulsan (KR)
(72) Inventor: AHN, Sanghyeok, 17084 Yongin-si (KR); LEE, Dongpo, 50978 Gimhae-si (KR); BAE, Gisan, 03960 Seoul (KR); WON, Yangsic, 44980 Ulsan (KR); KIM, Wooki, 44937 Ulsan (KR)
(74) Representative: Marks & Clerk LLP

(56) References cited:
- JP-A- 2017 193 156
- KR-A- 20200 049 454
- KR-B1- 100 994 819
- KR-B1- 101 817 783

## Description

### BACKGROUND

### 1. Field

One or more embodiments relate to a protrusion tray manufactured by vacuum forming, and more particularly, to a protrusion tray manufactured by vacuum forming, in which a protrusion in a horizontal direction is formed, which is difficult to implement in a vacuum forming mold and process according to the related art.

### 2. Description of the Related Art

Generally, in the industrial field, components, such as battery cells including lithium ion batteries, and liquid crystal panels used in various electronic products, are stored in a tray having a plurality of storage spaces to safely protect the components from external shocks, vibrations, etc. and to facilitate transportation and storage.

The tray as described above is generally manufactured by a vacuum forming method to reduce the manufacturing cost. In the vacuum forming method, which is a processing method in which a mold deforms a material by applying a compressive force to the material in the vertical direction, a protrusion in the horizontal direction cannot be formed in a portion of the product.

When a tray is manufactured by an injection method, the protrusion in the horizontal direction as described above may be formed. However, an injection mold costs about 100 million won, and the price of the product (tray) becomes very expensive.

In contrast, when a tray is manufactured by the vacuum forming method, the mold costs about 5 million won, and the product price is reduced to about 1/4 compared with the product manufactured by the injection method. Thus, the vacuum forming method is widely being used.

In addition, while the development period of an injection mold is very long, for example, two to three months, a vacuum forming mold can be developed for about three weeks and easily applied to various types of products (trays).

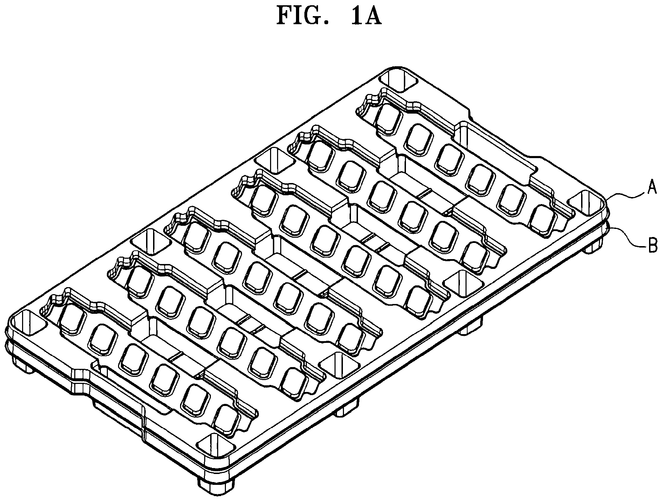

In order to minimize the volume during transportation and storage, trays manufactured by a vacuum forming method according to the related art are stacked with battery cells or liquid crystal panels stored therein. In this state, when trays are stacked on each other without rotating an upper tray A, as illustrated in FIG. 1A, the upper tray A and a lower tray B overlap each other. Accordingly, as a lower surface of the upper tray A contacts an upper surface of the lower tray B, the battery cells or liquid crystal panels stored in the storage space of the tray may be damaged.

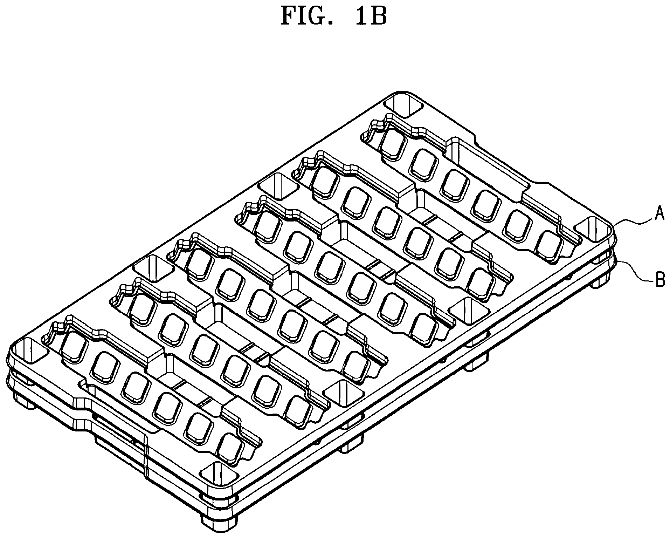

Accordingly, to prevent trays from being stacked in an overlap state, when the upper tray A is stacked on the lower tray B, as illustrated in FIG. 1B, it is essential to rotate and store the upper tray A by 180° in the horizontal direction with respect to the lower tray B. As the storage spaces formed in the tray are not symmetrical on the tray, the trays do not overlap each other by rotating and stacking the upper tray A by 180° in the horizontal direction. However, as described above, a process of rotating the upper tray A in the horizontal direction with respect to the lower tray B before stacking the upper tray A thereon is necessary, and thus, the investment cost of equipment due to the rotation work becomes excessive.

For example, as applications related to the technical fields of one or more embodiments, there are Korean Patent No. 10-2042082 and Korean Patent No. 10-1817783B1 which relates to a stacking stopper forming unit which manufactures a substrate tray structure in which the bottom surface of an upper substrate tray and a substrate stacked on a lower substrate tray are not in contact with each other, but are spaced apart from each other at predetermined intervals when vertically stacking a plurality of substrate trays.

### SUMMARY

Some aspects will be set forth in part in the description which follows and, in part, will be apparent from the description, or may be learned by practice of the presented embodiments of the disclosure.

Furthermore, the protrusion forming portion may include a first hinge hole through which the hinge portion passes, a protruding portion extending from the first hinge hole in the horizontal direction by a length, formed to have a width, and having an upper surface formed as a flat plane, a horizontal support surface formed above the first hinge hole to be flat to have a plane parallel to the upper surface of the protruding portion, and a vertical support surface formed in a direction opposite to a direction in which the protruding portion is located with respect to the first hinge hole and restricting an angle of the protrusion forming portion during pivoting of the protrusion forming portion from being greater than a predetermined angle, wherein, when the vacuum forming mold receives a compressive force, the protruding portion faces the horizontal direction so that a protrusion in the horizontal direction is formed in a product, and when the vacuum forming mold is separated, the protruding portion pivots to be removed from the protrusion formed on the product.

The guide portion may include a horizontal support formed in an upper portion of the guide portion to correspond to the horizontal support surface, when the vacuum forming mold receives a compressive force, the horizontal support surface closely contacts the horizontal support to restrict a lower limit of a rotation angle of the protruding portion, when the vacuum forming mold is separated, the protruding portion is formed to be caught by the horizontal support to restrict an upper limit of the rotation angle of the protruding portion, an upper portion of the protrusion forming portion includes one portion formed as the horizontal support surface and the other portion formed to have an arc shaped outline concentrically with the center of the hinge portion, and during the pivoting of the protrusion forming portion, no interference occurs between the horizontal support and the protrusion forming portion.

In addition, the guide portion may include a guide body formed in a shape to extrude a figure in a direction perpendicular to fixed surface (bottom surface), a guide fixing hole formed to penetrate one side of the guide body, and a guide fixing shaft coupled to the guide fixing hole to constrain the guide portion not to deviate from the body portion, and the body portion, where the storage space is formed in a shape corresponding to the guide body, may include a guide rail in which the guide fixing shaft is placed and providing a path along which the guide fixing shaft moves according to the vertical movements of the guide portion.

Furthermore, provided is a vacuum forming method of manufacturing a product by using a vacuum forming mold including a vacuum forming product protrusion forming device, the vacuum forming product protrusion forming device including a body portion fixed on one side of the vacuum forming mold, a guide portion inserted in the body portion to be movable in an up and down direction with respect to the body portion, a hinge portion connected to one side of the guide portion, and a protrusion forming portion connected to the one side of the guide portion through the hinge portion to be pivotable within an angular range around the hinge portion, wherein the body portion includes a coupling hole formed to be coupled to the vacuum forming mold, and a storage space formed to have a portion of the guide portion inserted therein, and in a process of separating the vacuum forming mold from the product, the protrusion forming portion pivots around the hinge portion, whereby the protrusion forming portion is removed from the protrusion formed on the product, the vacuum forming method including placing fabric on the vacuum forming mold, forming the fabric by vacuum pressing the same, separating a formed product from the vacuum forming mold, and producing a plurality of products by repeating the placing of the fabric to the separating of the product from the vacuum forming mold.

At least some of the above and other features of the invention are set out in the claims.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1A and FIG. 1B are perspective views of trays according to the different related arts stacked on each other;
FIG. 2 is an exploded perspective view of a vacuum forming product protrusion forming device according to one or more embodiments;

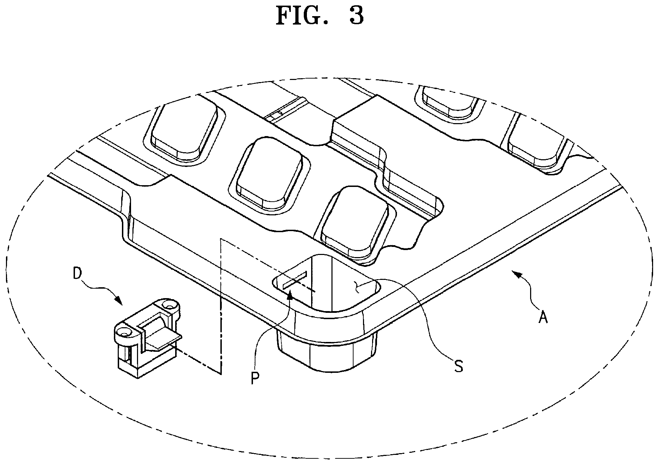

FIG. 3 is a perspective view showing a position at which a vacuum forming product protrusion forming device according to one or more embodiments forms a protrusion;

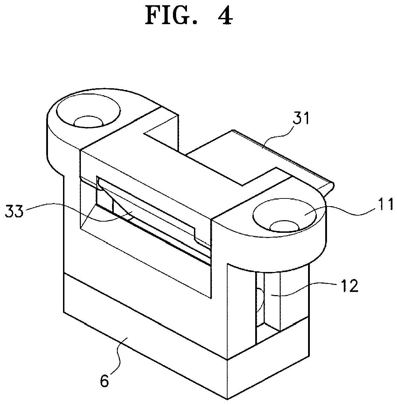

FIG. 4 is a perspective view of a vacuum forming product protrusion forming device according to one or more embodiments;
FIGS. 5A and 5B are operation flow charts of a vacuum forming product protrusion forming device according to one or more embodiments; and
FIG. 6 is a cross-sectional view of a stack portion when protrusion trays manufactured by vacuum forming according to one or more embodiments are stacked on each other.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, various embodiments are described with reference to the accompanying drawings. However, this is not intended to limit the disclosure to particular modes of practice, and it is to be appreciated that various modifications, equivalents, and alternatives that do not depart from the technical scope of the disclosure are encompassed in the disclosure. In the description of the drawings, similar parts are referenced with similar reference numerals.

In the specification, it will be further understood that the terms "comprises" and/or "comprising" used herein specify the presence of stated features (e.g., numbers, functions, operations, or constituent elements such as components), but do not preclude the presence or addition of one or more other features.

In the specification, the expressions such as "A or B," "at least one of A and/or B," or "at least one or more of A and/or B" may include all available combinations of items listed together. For example, the expressions such as "A or B," "at least one of A and B," or "at least one of A or B" may signify all cases of (1) including at least one A, (2) including at least one B, or (3) including both of at least one A and at least one B.

In the specification, when a constituent element, e.g., a first constituent element, is "(operatively or communicatively) coupled with/to" or is "connected to" another constituent element, e.g., a second constituent element, the constituent element contacts or is connected to the other constituent element directly or through at least one of other constituent elements, e.g., a third constituent element. Conversely, when a constituent element, e.g., a first constituent element, is described to "directly connect" or to be "directly connected" to another constituent element, e.g., a second constituent element, the constituent element should be construed to be directly connected to another constituent element without any other constituent element, e.g., a third constituent element, interposed therebetween.

In the specification, terms used in the specification are used for explaining a specific embodiment, not for limiting the disclosure. An expression used in a singular form in the specification also includes the expression in its plural form unless clearly specified otherwise in context. Unless defined otherwise, all terms used herein including technical or scientific terms have the same meanings as those generally understood by those of ordinary skill in the art to which the disclosure may pertain. The terms as those defined in generally used dictionaries are construed to have meanings matching that in the context of related technology and, unless clearly defined otherwise, are not construed to be ideally or excessively.

It will be understood by those of ordinary skill in the art that various changes in form and details may be made therein without departing from the scope of the disclosure as defined by the following claims.

According to one or more embodiments, provided is a vacuum forming product protrusion forming device D with a magnet, disposed at one side of a vacuum forming mold and forming a protrusion P protruding in a direction perpendicular to a mold transfer direction in one side of a product manufactured by vacuum forming, the vacuum forming product protrusion forming device D comprising: a body portion 1 fixed at one side of the vacuum forming mold; a guide portion 2 inserted in the body portion 1 to be movable in an up and down direction with respect to the body portion 1; a hinge portion 4 connected to one side of the guide portion 2; a protrusion forming portion 3 connected to the one side of the guide portion 2 through the hinge portion 4 to be pivotable within an angular range around the hinge portion 4; and a magnet 6 disposed under the body portion 1 and applying a magnetic force to the protrusion forming portion 3, wherein the body portion 1 comprises: a coupling hole 11 formed to be coupled to the vacuum forming mold; and a storage space 10 formed to have a portion of the guide portion 2 inserted therein, the body portion 1 and the guide portion 2 each include a non-magnetic material while the protrusion forming portion 3 includes a magnetic material, and in a process of separating the vacuum forming mold from the product, the protrusion forming portion 3 pivots around the hinge portion 4, and thus, the protrusion forming portion 3 is removed from the protrusion P formed on the product.

In the above description, the words "one side of a product" may mean one side or more. In other words, the protrusion P may be formed at one or more positions of products A and B, and to this end, one or more vacuum forming product protrusion forming devices D with a magnet may be disposed at many positions of a mold.

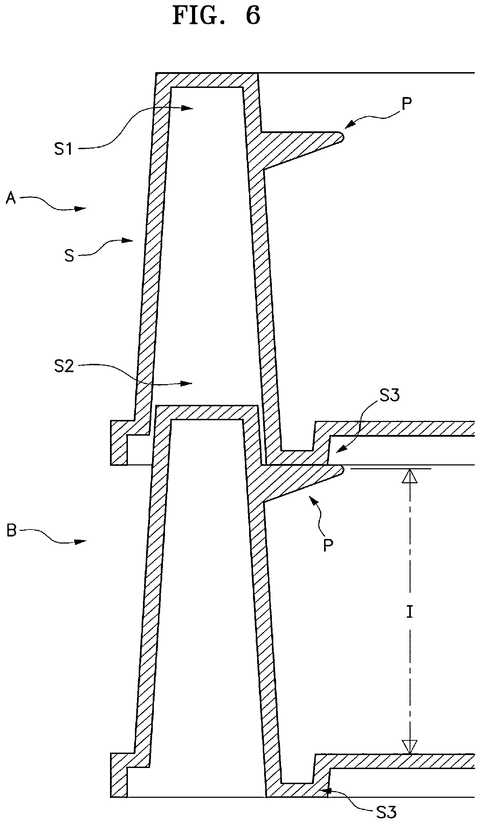

The protrusion P protruding in the direction perpendicular to the mold transfer direction may mean a portion of a product having a shape that is not taken out due to interference with a mold in the existing vacuum forming method, when an upper mold and a lower mold are transferred in the vertical direction to be separated from a vacuum mold. For example, when the protrusion P in the shape illustrated in FIG. 6 is formed by a mold itself, the product and the mold may not be normally separated from each other.

The vacuum forming product protrusion forming device D with a magnet may be coupled to the mold through a coupling member, such as a screw, a pin, or the like, and the coupling hole 11.

The certain angle range may be from 75° to 90°. The protrusion forming portion 3 maintains the horizontal direction in a process of forming a product, and the protrusion forming portion 3 may pivot to face up in a process of taking out the product.

The magnet 6 may have a cuboid shape having a size corresponding to an outer peripheral surface of a lower end portion of the body portion 1.

After the product A is taken out of the mold, the guide portion 2 is transferred in a lower direction by a magnetic force of the magnet 6 attracting the protrusion forming portion 3, and thus, a process error due to non-return of the guide portion 2 may be prevented.

Furthermore, the protrusion forming portion 3 may include a first hinge hole 30 through which the hinge portion 4 passes; a protruding portion 31 extending from the first hinge hole 30 in the horizontal direction by a length, formed to have a width, and having an upper surface formed as a flat plane; a horizontal support surface 32 formed above the first hinge hole 30 to be flat to have a plane parallel to the upper surface of the protruding portion 31; and a vertical support surface 33 formed in a direction opposite to a direction in which the protruding portion 31 is located with respect to the first hinge hole 30 and restricting the angle of the protrusion forming portion 3 during pivoting of the protrusion forming portion 3 from being greater than a predetermined angle. The protrusion forming portion 3 may be configured such that, when the vacuum forming mold receives a compressive force, the protruding portion 31 faces the horizontal direction so that a protrusion in the horizontal direction is formed in a product, and when the vacuum forming mold is separated, the protruding portion 31 pivots to be removed from the protrusion formed in the product.

An adverse slope 312 having an angle may be formed on a bottom surface 312 of the protruding portion 31.

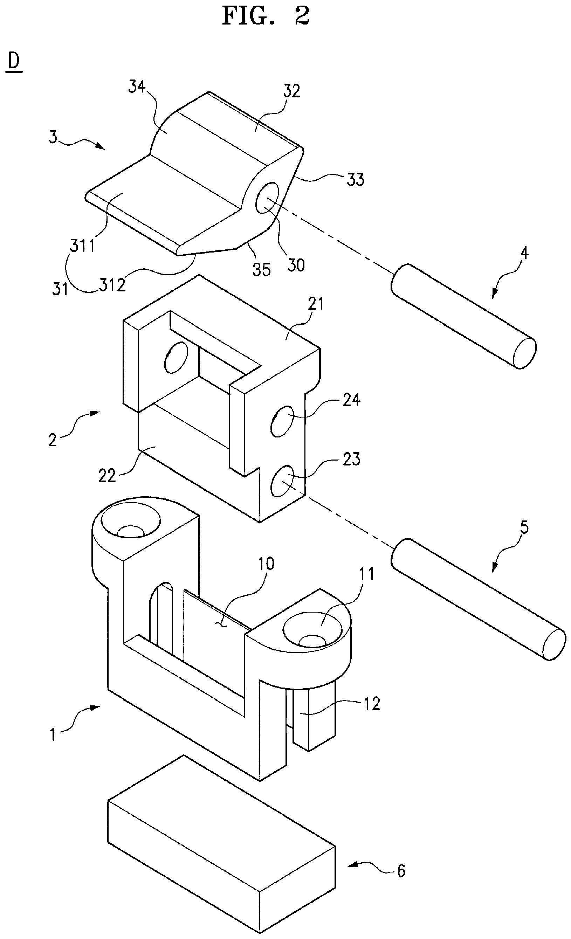

A horizontal contact surface 35 contacting the guide portion 2 may be formed between the adverse slope 312 and the vertical support surface 33, and connection portions among the adverse slope 312, the horizontal contact surface 35, the vertical support surface 33 may each have a curvature. Reference number 34 in FIG. 2 indicates arc shaped profile or contour.

In the process of forming a product, a flat surface 311 of the protruding portion 31 (the upper surface of the protruding portion 31) is maintained in the horizontal direction (a direction parallel to the ground) and the horizontal contact surface 35 is fixed in close contact with the guide portion 2. In the process of taking out the product, the protruding portion 31 pivots upward and is fixed such that the vertical support surface 33 is in close contact with the guide portion 2 or an end portion between the vertical support surface 33 and the horizontal support surface 32 is caught by in the guide portion 2. A slope (angle) between the adverse slope 312 and the vertical support surface 33 may be formed such that the adverse slope 312 maintains a right angle to the ground when the vertical support surface 33 is in close contact with the guide portion 2 or the end portion between the vertical support surface 33 and the horizontal support surface 32 is caught by in the guide portion 2.

The hinge portion 4 is coupled to pass through a second hinge hole 24 formed in the guide portion 2 and the first hinge hole 30 of the protrusion forming portion 3.

The guide portion 2 may include a horizontal support 21 formed in an upper portion of the guide portion 2 to correspond to the horizontal support surface 32. When the vacuum forming mold receives a compressive force, the horizontal support surface 32 closely contacts the horizontal support 21 to restrict a lower limit of a rotation angle of the protruding portion 31, and when the vacuum forming mold is separated, the protruding portion 31 is formed to be caught by the horizontal support 21 to restrict an upper limit of the rotation angle of the protruding portion 31. As the upper portion of the protrusion forming portion 3 includes one portion formed as the horizontal support surface 32 and the other portion formed to have an arc shaped outline concentrically with the center of the hinge portion 4, during the pivoting of the protrusion forming portion 3, no interference occurs between the horizontal support 21 and the protrusion forming portion 3.

When the horizontal support 21 is not provided, in a vacuum forming process, the protruding portion 31 is bent upward or downward by a compressive force or the like so that protrusions of produced products may be out of tolerance. Furthermore, there may be a case in which the protruding portion 31 is not returned to the original state (a horizontal state) even after, in a product taking-out process, the protruding portion 31 pivots by 90° or more so that a product is taken out product. To address such an issue, as described above, the upper limit and lower limit of the rotation angle of the protrusion forming portion 3 may be physically restricted through the horizontal support 21.

By forming an arc shaped outline in a portion of the upper portion of the protrusion forming portion 3, during the pivoting of the protrusion forming portion 3, interference and friction with the horizontal support 21 may be prevented.

In addition, the guide portion 2 may include a guide body 22 formed in a shape to extrude a figure in a direction perpendicular to fixed surface (bottom surface); a guide fixing hole 23 formed to penetrate one side of the guide body 22; and a guide fixing shaft 5 coupled to the guide fixing hole 23 to constrain the guide portion 2 not to deviate from the body portion 1. The body portion 1, where the storage space 10 is formed in a shape corresponding to the guide body 22, may include a guide rail 12 in which the guide fixing shaft 5 is placed and providing a path along which the guide fixing shaft 5 moves according to the vertical movements of the guide portion 2.

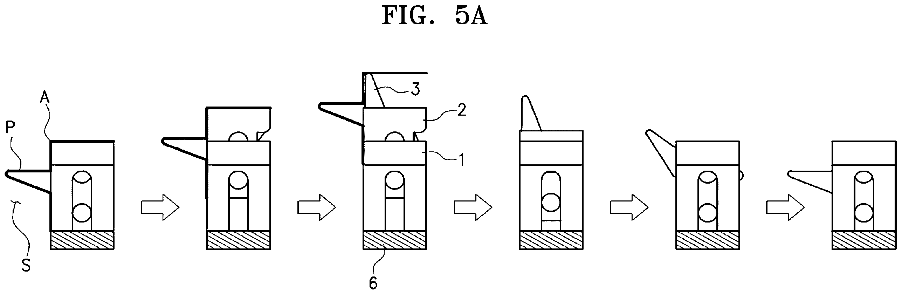

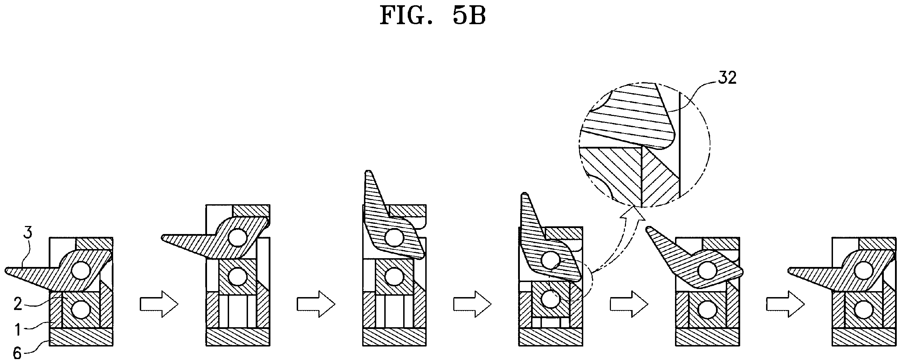

A process of the operation of the vacuum forming product protrusion forming device with a magnet according to one or more embodiments is described below with reference to FIGS. 5A and 5B.

A protrusion, in detail, an adverse slope protrusion, may be formed on a product formed along the outer peripheral surface of the vacuum forming product protrusion forming device with a magnet by the vacuum forming process.

In a process of separating an upper mold and a lower mold of the vacuum forming mold, the product and the protrusion forming portion 3 and the guide portion 2 connected to the protrusion of the product are transferred upward by power for separating the mold. The guide portion 2 may be transferred along the guide rail 12 upward in the vertical direction, and as the guide fixing shaft 5 is caught by an upper end of the guide rail 12, the transfer is stopped. A tension load is applied between the protrusion forming portion 3 and the product, by the body portion 1 of the vacuum forming product protrusion forming device with a magnet, which is fixed on the lower mold, and the protrusion forming portion 3 pivots by the tension load so that the protruding portion 31 is removed from the protrusion.

When the protruding portion 31 is removed from the protrusion, the vacuum forming product protrusion forming device with a magnet and the product are separated from each other, and thus, the guide portion 2 and the protrusion forming portion 3 are transferred downward by their own weight.

Furthermore, a method of manufacturing a vacuum forming mold, including the vacuum forming product protrusion forming device with a magnet as described above, may include: coupling the protrusion forming portion 3 to the guide portion 2 via the hinge portion 4; inserting the guide portion 2 into the body portion 1; coupling the guide fixing shaft 5 to the guide portion 2; manufacturing the vacuum forming product protrusion forming device D with a magnet by placing the magnet 6 under the body portion 1; and coupling the vacuum forming product protrusion forming device D with a magnet to one side of the vacuum forming mold.

The protrusion forming portion 3, the hinge portion 4, the body portion 1, the guide portion 2, and the like may include a metal material. As the processing of each of the protrusion forming portion 3, the hinge portion 4, the body portion 1, and the guide portion 2 into the shapes as illustrated can be performed by a person skilled in the art with reference to the descriptions of one or more embodiments, detailed descriptions thereof are omitted.

According to one or more embodiments, a vacuum forming method of manufacturing a product by using a vacuum forming mold, including the vacuum forming product protrusion forming device D described above, may include: placing fabric on the vacuum forming mold; forming the fabric by vacuum pressing the same; separating a formed product from the vacuum forming mold; and producing a plurality of products by repeating the placing of the fabric to the separating of the product from the vacuum forming mold.

Protrusion trays A and B manufactured by the vacuum forming method as above are provided.

In addition, the protrusion trays A and B manufactured by vacuum forming are provided, in which the protrusion trays A and B each include a stack portion S formed to stack a plurality of trays, and the stack portion S is formed such that the cross-sectional area (inner cross-sectional area) of the lower portion S2 is greater than the cross-sectional area of an upper portion S1, and as a lower end S3 of a stack portion of the tray A stacked above is placed on a protrusion P of the tray B stacked below, an inner space I is formed between the trays A and B that are stacked such that components arranged in the tray B are prevented from contacting the tray A stacked above.

In the vacuum forming, as described above, when the cross-sectional area of the lower portion S2 is greater than the cross-sectional area of the upper portion S1, the product A may be easily taken out from the mold, and during stacking, the upper portion S1 of the stack portion of the lower tray B is inserted into and placed in the inside of the lower portion S2 of the stack portion of the tray A stacked above.

However, in the structure, as illustrated in FIG. 1A, as no space is formed between the trays A and B that are stacked on each other, components placed in the tray B below are pressed by the tray A stacked above to be damaged/deformed. To prevent this issue, the tray B stacked below and the tray A stacked above are stacked to be rotated by 90° with respect to each other, and thus, equipment/process for rotating a tray needs to be added, resulting in an increase in the cost and tact time.

According to one or more embodiments, as described above, by forming the protrusion P in the stack portion S of a tray, a space is formed between a plurality of trays stacked on each other so that components placed in the tray are not contacted by a tray above, while employing a vacuum forming method that is very economical, not an injection molding method.

According to one or more embodiments, a stack protrusion having an adverse slope shape may be formed on an inner side surface of a storage space of a tray manufactured through vacuum forming.

Furthermore, when stacking trays through the stack protrusion as described above, without rotating an upper tray, components placed in a lower tray do not contact a lower surface of the upper tray and are spaced apart therefrom by a distance.

In the process of manufacturing a tray through vacuum forming, no shock or undesired deformation occurs in the tray, and without an additional process, a stack protrusion having an adverse slope shape may be formed in the tray.

In addition, while manufacturing a product at a remarkably low cost compared with that of injection molding, a product having a protrusion shape (a product with quality/strength of an equivalent level compared with an injection forming product), which has been formed through injection molding only, may be manufactured.

Furthermore, as a mold development period is relatively short, application to products having various shapes is made easy.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

## Claims

1. A vacuum forming method of manufacturing a product by using a vacuum forming mold including a vacuum forming product protrusion forming device (D), the vacuum forming product protrusion forming device (D) comprising: a body portion (1) fixed on one side of the vacuum forming mold; a guide portion (2) inserted in the body portion (1) to be movable in an up and down direction with respect to the body portion (1); a hinge portion (4) connected to one side of the guide portion (2); and a protrusion forming portion (3) connected to the one side of the guide portion (2) through the hinge portion (4) to be pivotable within an angular range around the hinge portion (4), wherein the body portion (1) comprises: a coupling hole (11) formed to be coupled to the vacuum forming mold; and a storage space (10) formed to have a portion of the guide portion (2) inserted therein, and in a process of separating the vacuum forming mold from the product, the protrusion forming portion (3) pivots around the hinge portion (4), whereby the protrusion forming portion (3) is removed from the protrusion (P) formed on the product, the vacuum forming method comprising:
placing fabric on the vacuum forming mold;
forming the fabric by vacuum pressing a same;
separating a formed product from the vacuum forming mold; and
producing a plurality of products by repeating the placing of the fabric to the separating of the product from the vacuum forming mold.

2. The vacuum forming method of claim 1, wherein the protrusion forming portion (3) comprises:
a first hinge hole (30) through which the hinge portion (4) passes;
a protruding portion (31) extending from the first hinge hole (30) in the horizontal direction by a length, formed to have a width, and having an upper surface formed as a flat plane;
a horizontal support surface (32) formed above the first hinge hole (30) to be flat to have a plane parallel to the upper surface of the protruding portion (31); and
a vertical support surface (33) formed in a direction opposite to a direction in which the protruding portion (31) is located with respect to the first hinge hole (30) and restricting an angle of the protrusion forming portion (3) during pivoting of the protrusion forming portion (3) from being greater than a predetermined angle, and
wherein, when the vacuum forming mold receives a compressive force, the protruding portion (31) faces the horizontal direction so that a protrusion in the horizontal direction is formed in a product, and
when the vacuum forming mold is separated, the protruding portion (31) pivots to be removed from the protrusion (P) formed on the product.

3. The vacuum forming method of claim 2, wherein the guide portion (2) comprises a horizontal support (21) formed in an upper portion of the guide portion (2) to correspond to the horizontal support surface (32),
when the vacuum forming mold receives a compressive force, the horizontal support surface (32) closely contacts the horizontal support (21) to restrict a lower limit of a rotation angle of the protruding portion (31),
when the vacuum forming mold is separated, the protruding portion (31) is formed to be caught by the horizontal support (21) to restrict an upper limit of the rotation angle of the protruding portion (31),
an upper portion of the protrusion forming portion (3) includes one portion formed as the horizontal support surface (32) and the other portion formed to have an arc shaped outline concentrically with the center of the hinge portion (4), and
during the pivoting of the protrusion forming portion (3), no interference occurs between the horizontal support (21) and the protrusion forming portion (3).

## Patentansprüche

1. Vakuumformverfahren zum Herstellen eines Produkts durch Verwendung einer Vakuumform-Modellform einschließlich einer Vakuumform-Produktvorsprungsformvorrichtung (D), wobei die Vakuumform-Produktvorsprungsformvorrichtung (D) Folgendes umfasst: einen Körperabschnitt (1), der an einer Seite der Vakuumform-Modellform befestigt ist; einen Führungsabschnitt (2), der in den Körperabschnitt (1) eingeführt ist, um in eine Richtung nach oben und nach unten in Bezug auf den Körperabschnitt (1) bewegbar zu sein; einen Scharnierabschnitt (4), der mit einer Seite des Führungsabschnitts (2) verbunden ist; und einen Vorsprungsformabschnitt (3), der durch den Scharnierabschnitt (4) mit der einen Seite des Führungsabschnitts (2) verbunden ist, um innerhalb von einem Winkelbereich um den Scharnierabschnitt (4) herum schwenkbar zu sein, wobei der Körperabschnitt (1) Folgendes umfasst: ein Kopplungsloch (11), das geformt ist, um mit der Vakuumform-Modellform gekoppelt zu werden; und einen Stauraum (10), der geformt ist, damit ein Abschnitt des Führungsabschnitts (2) darin eingeführt werden kann, und in einem Vorgang des Trennens der Vakuumform-Modellform von dem Produkt schwenkt der Vorsprungsformabschnitt (3) um den Scharnierabschnitt (4) herum, wodurch der Vorsprungsformabschnitt (3) aus dem an dem Produkt geformten Vorsprung (P) entfernt wird, wobei das Vakuumformverfahren Folgendes umfasst:
Platzieren von Gewebe auf der Vakuumform-Modellform;
Formen des Gewebes durch Vakuumpressen desselben;
Trennen eines geformten Produkts von der Vakuumform-Modellform; und
Fertigen einer Vielzahl von Produkten durch Wiederholung des Platzierens des Gewebes bis hin zum Trennen des Produkts von der Vakuumform-Modellform.

2. Vakuumformverfahren nach Anspruch 1, wobei der Vorsprungsformabschnitt (3) Folgendes umfasst:
ein erstes Scharnierloch (30), durch das der Scharnierabschnitt (4) läuft;
einen vorspringenden Abschnitt (31), der sich von dem ersten Scharnierloch (30) in der horizontalen Richtung einer Länge nach erstreckt, dazu geformt, eine Breite aufzuweisen, und mit einer als eine flache Ebene ausgebildeten oberen Oberfläche;
eine horizontale Stützoberfläche (32), die oberhalb des ersten Scharnierlochs (30) geformt ist, um flach zu sein, um eine Ebene aufzuweisen, die parallel zu der oberen Oberfläche des vorspringenden Abschnitts (31) ist; und
eine vertikale Stützoberfläche (33), die in einer Richtung gegenüber einer Richtung, in der sich der vorspringende Abschnitt (31) in Bezug auf das erste Scharnierloch (30) befindet, geformt ist und während des Schwenkens des Vorsprungsformabschnitts (3) einen Winkel des Vorsprungsformabschnitts (3) begrenzt, damit er nicht größer als ein vorbestimmter Winkel ist, und
wobei, wenn die Vakuumform-Modellform eine Druckkraft empfängt, der vorspringende Abschnitt (31) der horizontalen Richtung zugewandt ist, sodass ein Vorsprung in der horizontalen Richtung in einem Produkt geformt wird, und
wenn die Vakuumform-Modellform getrennt wird, der vorspringende Abschnitt (31) schwenkt, um aus dem an dem Produkt geformten Vorsprung (P) entfernt zu werden.

3. Vakuumformverfahren nach Anspruch 2, wobei der Führungsabschnitt (2) eine horizontale Stütze (21) umfasst, die in einem oberen Abschnitt des Führungsabschnitts (2) geformt ist, um der horizontalen Stützoberfläche (32) zu entsprechen,
wenn die Vakuumform-Modellform eine Druckkraft empfängt, die horizontale Stützoberfläche (32) die horizontale Stütze (21) eng kontaktiert, um eine Untergrenze eines Drehwinkels des vorspringenden Abschnitts (31) zu begrenzen,
wenn die Vakuumform-Modellform getrennt wird, der vorspringende Abschnitt (31) geformt wird, um von der horizontalen Stütze (21) aufgehalten zu werden, um eine Obergrenze des Drehwinkels des vorspringenden Abschnitts (31) zu begrenzen,
ein oberer Abschnitt des Vorsprungsformabschnitts (3) einen Abschnitt einschließt, der als die horizontale Stützoberfläche (32) geformt ist und der andere Abschnitt geformt ist, um einen bogenförmigen Umriss aufzuweisen, der mit der Mitte des Scharnierabschnitts (4) konzentrisch ist, und
während des Schwenkens des Vorsprungsformabschnitts (3) keine Beeinträchtigung zwischen der horizontalen Stütze (21) und dem Vorsprungsformabschnitt (3) auftritt.

## Revendications

1. Procédé de formage sous vide pour fabriquer un produit en utilisant un moule de formage sous vide incluant un dispositif de formage de saillies de produits par formage sous vide (D), le dispositif de formage de saillies de produits par formage sous vide (D) comprenant : une partie de corps (1) fixée sur un côté du moule de formage sous vide ; une partie de guidage (2) insérée dans la partie de corps (1) pour être mobile dans une direction ascendante et descendante par rapport à la partie de corps (1) ; une partie de charnière (4) connectée à un côté de la partie de guidage (2) ; et une partie de formage de saillies (3) connectée audit un côté de la partie de guidage (2) à travers la partie de charnière (4) pour pouvoir pivoter au sein d'une plage angulaire autour de la partie de charnière (4), dans lequel la partie de corps (1) comprend : un trou d'accouplement (11) formé pour être accouplé au moule de formage sous vide ; et un espace de stockage (10) formé pour qu'une partie de la partie de guidage (2) soit insérée dedans, et dans un processus de séparation du moule de formage sous vide du produit, la partie de formage de saillies (3) pivote autour de la partie de charnière (4), moyennant quoi la partie de formage de saillies (3) est retirée de la saillie (P) formée sur le produit, le procédé de formage sous vide comprenant :
le placement d'un tissu sur le moule de formage sous vide ;
le formage du tissu en pressant sous vide le même ;
la séparation d'un produit formé du moule de formage sous vide ; et
la production d'une pluralité de produits en répétant le placement du tissu jusqu'à la séparation du produit du moule de formage sous vide.

2. Procédé de formage sous vide selon la revendication 1, dans lequel la partie de formage de saillies (3) comprend :
un premier trou de charnière (30) à travers lequel passe la partie de charnière (4) ;
une partie saillante (31) s'étendant à partir du premier trou de charnière (30) dans la direction horizontale sur une longueur, formée pour avoir une largeur, et ayant une surface supérieure formée comme un plan plat ;
une surface de support horizontale (32) formée au-dessus du premier trou de charnière (30) pour être plate et comporter un plan parallèle à la surface supérieure de la partie saillante (31) ; et
une surface de support verticale (33) formée dans une direction opposée à une direction dans laquelle la partie saillante (31) est située par rapport au premier trou de charnière (30) et limitant un angle de la partie de formage de saillies (3) pendant le pivotement de la partie de formage de saillies (3) pour qu'il ne soit pas supérieur à un angle prédéterminé, et
dans lequel, lorsque le moule de formage sous vide reçoit une force de compression, la partie saillante (31) fait face à la direction horizontale de sorte qu'une saillie dans la direction horizontale est formée dans un produit, et
lorsque le moule de formage sous vide est séparé, la partie saillante (31) pivote pour être retirée de la saillie (P) formée sur le produit.

3. Procédé de formage sous vide selon la revendication 2, dans lequel la partie de guidage (2) comprend un support horizontal (21) formé dans une partie supérieure de la partie de guidage (2) pour correspondre à la surface de support horizontale (32),
lorsque le moule de formage sous vide reçoit une force de compression, la surface de support horizontale (32) entre en contact étroit avec le support horizontal (21) pour restreindre une limite inférieure d'un angle de rotation de la partie saillante (31),
lorsque le moule de formage sous vide est séparé, la partie saillante (31) est formée pour être attrapée par le support horizontal (21) pour restreindre une limite supérieure de l'angle de rotation de la partie saillante (31),
une partie supérieure de la partie de formage de saillies (3) inclut une partie formée comme la surface de support horizontale (32) et l'autre partie formée pour avoir un contour en forme d'arc concentrique avec le centre de la partie de charnière (4), et
pendant le pivotement de la partie de formage de saillies (3), aucune interférence ne se produit entre le support horizontal (21) et la partie de formage de saillies (3).
